# FASCICULE DE BREVET EUROPEEN

(11) **EP 1 706 218 B1**
(45) Date de publication et mention de la délivrance du brevet: **11.09.2013**
(21) Numéro de dépôt: 05717411.2
(22) Date de dépôt: 13.01.2005
(51) Int. Cl.: B08B 1/00

(54) **Dispositif de nettoyage d'un dépôt de matière sur une barre et procédé correspondant**
Vorrichtung zur Reinigung einer Materialablagerung auf einer Stange und einschlägiges Verfahren
Device for cleaning a deposit of material on a bar and coresponding process

(30) Priorité: 19.01.2004 FR 0400452
(43) Date de publication de la demande: 04.10.2006
(73) Titulaire: Trumpf Grüsch AG, 7214 Grüsch (CH)
(72) Inventeur: Thuet, Jean-Paul, 60330 Le Piessis Belleville (FR)
(74) Mandataire: Kohler Schmid Möbus
(86) Numéro de dépôt international: PCT/FR2005/000076
(87) Numéro de publication internationale: WO 2005/077552

(56) Documents cités:
- DE-A1- 3 310 069
- GB-A- 210 773
- US-A- 4 176 417

## Description

La présente invention concerne un dispositif de nettoyage d'un dépôt de matière sur une barre selon la revendication 1 et un procédé associé selon la revendication 12.

Dans des installations de découpe de pièces, notamment dans des installations robotisées, une tôle est déposée sur un banc comprenant une pluralité de barres de support, disposées de façon espacées entre elles, afin de réaliser un maintien et un positionnement précis de la tôle par rapport à un outil de travail apte a découper ladite tôle. L'outil de travail réalise ensuite de manière séquentielle la découpe.

Dans les installations utilisant un procédé thermique pour réaliser la découpe de la tôle, par exemple dans des installations du type découpe laser ou découpe plasma, une source de puissance élevée émet un flux énergétique se dissipant dans la matière et fondant la tôle.

Sur de telles installations, après plusieurs cycles de découpe, il se produit une accumulation de matière fondue sur une partie supérieure des barres de support. Un tel dépôt solidifié engendre un relèvement de la tôle à découper et occasionne un mauvais positionnement de la tôle par rapport à l'outil de découpe, diminuant ainsi la qualité des pièces produites et pouvant également provoquer une interruption de la production.

Après un certain temps d'utilisation de l'installation de découpe, il devient alors nécessaire d'interrompre la fabrication de pièces pour remplacer les barres encrassées par un nouveau jeu de barres, ou pour nettoyer directement les barres sur le banc. Les barres encrassées sont actuellement nettoyées en utilisant un marteau pour frapper les barres.

Aux autres domaines, les dispositifs de nettoyage divergents sont connus. Ainsi le GB 210,773 A décrit un dispositif selon le préambule de la revendication 1 pour nettoyer des tubes de bouilloire de chauffage comprenant des rôles, lesquelles permettent un mouvement le long des tubes, et un outil de nettoyage avec des lames. US 4,176,417 manifeste un outil de nettoyage actionné par la main est à retirer pour les soins de gazon, lequel montre une fin divisée en deux, qui forme une paire de lames.

Dans les installations de découpe de pièces, l'on cherche à augmenter la productivité et la durée de fonctionnement, et à réduire les temps morts. Il devient alors important de réduire au maximum le temps de nettoyage des barres supportant les tôles.

Aussi, le but de l'invention est de fournir un dispositif de nettoyage permettant de nettoyer d'une façon améliorée de telles barres.

A cet effet, le dispositif de nettoyage d'un dépôt de matière sur une barre comprend un corps, au moins un élément de guidage fixé sur le corps et pourvu d'une surface de contact avec la barre, un moteur d'entraînement, un organe de nettoyage articulé autour d'un axe de liaison du corps et entraîné par le moteur dans un mouvement entre une position extrême éloignée et une position extrême rapprochée par rapport à l'élément de guidage. L'organe de nettoyage comprend au moins deux couteaux et un passage formé entre les couteaux, chaque couteau comprenant une surface de travail, au moins une portion de ladite surface de travail étant sensiblement au niveau de la surface de contact de l'élément de guidage dans la position extrême rapprochée de l'organe de nettoyage.

Un tel dispositif présente l'avantage d'être de construction particulièrement simple et relativement économique.

Le dispositif permet également de réaliser le nettoyage des barres, sans avoir à les démonter du banc, d'une manière particulièrement rapide et efficace. Il devient ainsi possible d'utiliser un unique jeu de barres afin de fabriquer des pièces. Avec un tel dispositif, il n'est donc plus nécessaire de prévoir plusieurs jeux de barres, de coût relativement élevé.

Le dispositif permet, en outre, de réduire le remplacement des jeux de barres.

Le dispositif permet également d'augmenter la durée d'utilisation des barres. En effet, actuellement le dépôt de matière sur les barres est nettoyé de façon manuelle par des opérateurs venant frapper la partie supérieure des barres à l'aide de marteaux, pouvant provoquer une détérioration prématurée des barres. Avec le dispositif de nettoyage, le dépôt de matière fondue puis solidifiée est arraché des barres par le mouvement des couteaux de l'organe de nettoyage contre les faces latérales de la barre, les couteaux étant adjacents à la partie supérieure de la barre et en utilisation normale, ne frappant pas la surface apte à réaliser le support des plaques de tôles.

Avec un tel dispositif, la sécurité des opérateurs réalisant l'opération de nettoyage est accrue. En effet, il n'est plus nécessaire pour les opérateurs de manipuler des marteaux ou des dispositifs comprenant des outils abrasifs se présentant par exemple sous forme de disques montés à rotation et ayant une vitesse de coupe élevée, telle qu'une meuleuse. Le risque d'accident d'un opérateur utilisant le dispositif de nettoyage, par exemple par coupure, est ainsi particulièrement réduit.

En outre, le dispositif permet de nettoyer les barres par un arrachement du dépôt de manière et non pas par une coupe engendrant des projections de fines particules de matière engendrant une pollution particulièrement néfaste de l'environnement ambiant et risquant d'être inhalée par des opérateurs.

Avec un tel dispositif, il devient aussi possible de réaliser l'opération de nettoyage des barres avec un seul opérateur.

Avec un tel dispositif, il est également possible de nettoyer des barres de différentes épaisseurs, pour cela il suffit de remplacer l'organe de nettoyage, monté sur le corps de façon démontable, par un autre organe de nettoyage comprenant un passage entre les couteaux de dimension sensiblement égale à l'épaisseur de la barre à nettoyer.

Chaque couteau du dispositif de nettoyage peut comprendre une surface de contact avec la barre.

Dans un mode de réalisation, le dispositif comprend un premier élément de guidage et un second élément de guidage disposés de part et d'autre de l'organe de nettoyage.

Un tel dispositif comprenant des éléments de guidage de part et d'autre de l'organe de nettoyage présente l'avantage d'être équipé d'éléments permettant de réaliser également l'appui du dispositif de nettoyage sur la barre afin d'obtenir un bon arrachement du dépôt sur la barre.

Les couteaux peuvent avantageusement être inclinés par rapport à l'élément de guidage, l'organe de nettoyage pouvant également être réalisé de façon monobloc.

Dans un autre mode de réalisation, l'organe de nettoyage comprend deux roues dentées. L'organe de nettoyage peut également comprendre deux chaînes dentées.

De préférence, le dispositif de nettoyage comprend des moyens de préhension fixés au niveau du corps.

En d'autres termes, le dispositif comprend deux organes de guidage disposés de chaque côté de l'organe de nettoyage aptes à venir en contact avec le dépôt de matière solidifié présent sur la barre, le premier organe de guidage étant situé à l'avant du dispositif et le second organe de guidage étant situé à l'arrière. L'organe de nettoyage est entraîné par le moteur dans un mouvement comprenant une composante avant et une composante arrière. En d'autres termes, l'organe de nettoyage est animé d'un mouvement oscillant. L'organe de nettoyage peut également être entraîné dans un mouvement de rotation.

L'organe de nettoyage comprend au moins deux outils tranchants pourvu d'une surface de contact avec les faces latérales de la barre à nettoyer espacés entre eux de façon à former un canal apte à laisser le passage à la barre de support. En d'autres termes, les outils sont espacés d'une distance sensiblement égale à l'épaisseur de la barre.

L'invention concerne également un ensemble de nettoyage d'un dépôt de matière sur une barre comprenant un socle, un robot articulé au niveau du socle et au moins un moyen de manipulation apte à coopérer avec des moyens de préhension d'un dispositif de nettoyage selon un aspect de l'invention.

Le robot peut avantageusement être mobile par rapport au socle.

L'ensemble de nettoyage peut également comprendre un convoyeur de barres, le robot étant fixe par rapport au socle.

L'invention concerne enfin un procédé de nettoyage d'un dépôt de matière sur une barre selon la revendication 12, dans lequel on guide le dispositif de nettoyage selon la revendication 1 en guidant l'organe de nettoyage comprenant au moins deux couteaux sur une portion de la barre par l'intermédiaire d'une surface de contact d'au moins un élément de guidage, et on entraîne l'organe de nettoyage d'une position extrême éloignée jusqu'à une position extrême rapprochée par rapport à l'élément de guidage dans laquelle la surface de travail des couteaux est sensiblement au niveau de la surface de contact de l'élément de guidage.

La présente invention sera mieux comprise à l'étude de la description détaillée de modes de réalisation pris à titre d'exemples nullement limitatifs et illustrés par les dessins annexés, sur lesquels :
- la figure 1 est une vue de face d'un dispositif de nettoyage selon un premier mode de réalisation de l'invention, dans une première position d'un organe de nettoyage;
- la figure 2 est une vue correspondant à la figure 1, dans une seconde position de l'organe de nettoyage;
- la figure 3 est une vue partielle de dessus de l'organe de nettoyage du dispositif de nettoyage de la figure 1;
- la figure 4 est une vue de face du dispositif de nettoyage selon un second mode de réalisation de l'invention,
- la figure 5 est une vue de face du dispositif de nettoyage selon un troisième mode de réalisation de l'invention,
- la figure 6 est une vue partielle de côté du dispositif de nettoyage de la figure 5, et
- la figure 7 est une vue de face du dispositif de nettoyage selon un quatrième mode de réalisation de l'invention.

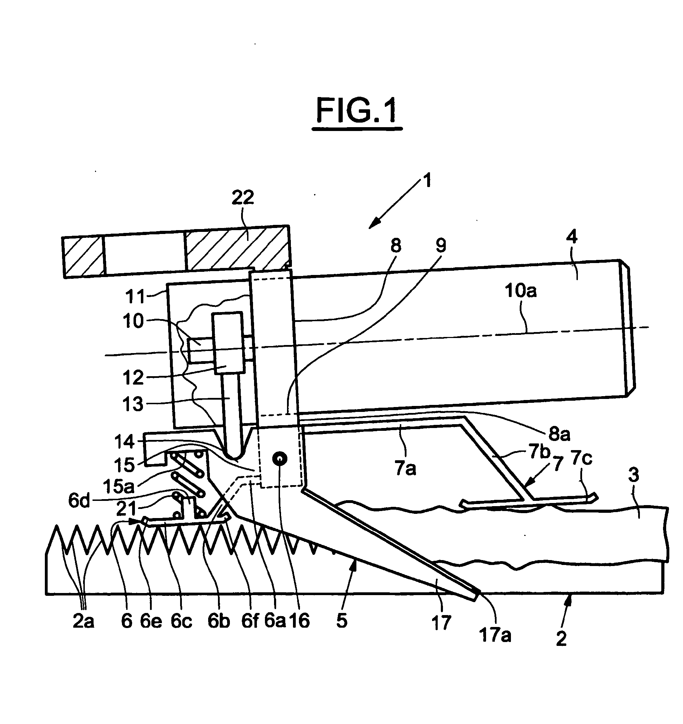

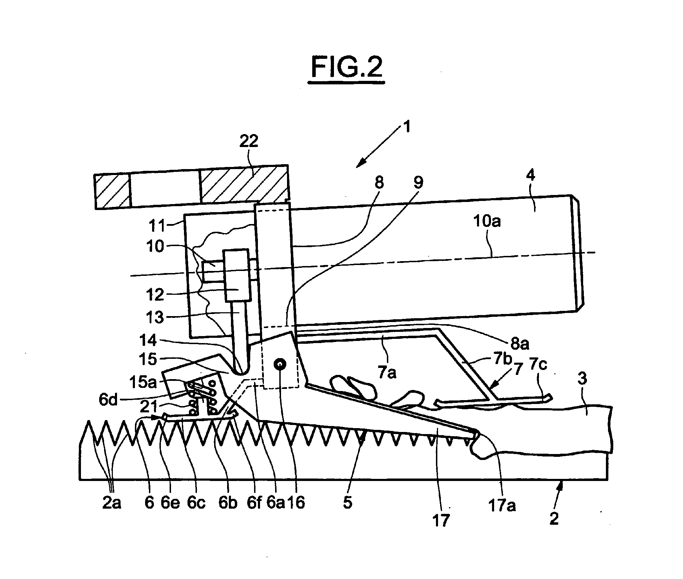

Sur les figures 1 et 2, un dispositif de nettoyage, référencé 1 dans son ensemble, est disposé en appui sur une barre 2 de support.

La barre 2 comprend une pluralité d'extrémités en saillies de même hauteur, réalisées ici sous forme de dents 2a. Les dents 2a permettent de supporter de façon ponctuelle une portion d'une tôle (non représentée) lors d'une opération de découpe. Les dents 2a sont en partie recouvertes par un dépôt 3 de matière résultant d'une découpe de la tôle (non représentée) par un procédé de découpe thermique, par exemple par une découpe au laser. Bien entendu, le dispositif de nettoyage est également adapté pour nettoyer des barres pleines.

Le dispositif de nettoyage 1 comprend un corps 4, un organe de nettoyage 5 articulé sur le corps 4, des premier et un second éléments de guidage, référencés respectivement 6 et 7, disposés de part et d'autre de l'organe de nettoyage 5 et fixés sur le corps 4.

Le corps 4, s'étendant sensiblement horizontalement, comprend à une de ses extrémité une pièce de support 8 muni d'un alésage 9 laissant le passage à un arbre de sortie 10 d'un moteur (non représenté), disposé à l'intérieur du corps 4. L'arbre de sortie 10, d'axe 10a, débouche à l'intérieur d'un carter 11, fixé sur la pièce de support 8 du côté opposé au corps 4.

La pièce de support 8 s'étend de façon sensiblement perpendiculaire au corps 4 et comprend une portion d'extrémité 8a en saillie radiale.

Le premier élément de guidage 6, fixé au niveau de la portion d'extrémité 8a du côté opposé au corps 4, comprend un bras coudé de support pourvu de portions droites 6a et 6b. La portion droite 6b est prolongée, à l'extrémité opposée à la portion droite 6a, par un patin 6c s'étendant de façon sensiblement plane et comprenant, dans sa partie supérieure, une saillie 6d s'étendant de façon perpendiculaire. Le patin 6c comprend également, à chacune de ses extrémités des portions recourbées 6e et 6f formant spatules. Le patin 6c comprend, dans sa partie inférieure, une surface de contact avec la barre 2.

D'une manière analogue, le second élément de guidage 7, fixé au niveau de la portion d'extrémité 8a du côté du corps 4 comprend un bras coudé de support pourvu de portions droites 7a et 7b, et un patin 7c comprenant une surface de contact avec la barre 2.

Les patins 6c et 7c, sensiblement alignés longitudinalement, permettent de réaliser un guidage et un appui du dispositif de nettoyage 1 sur la barre 2.

L'arbre de sortie 10 comprend un excentrique 12 pourvu d'une surface de came coopérant avec une tige cylindrique 13, disposée radialement et mobile radialement en translation. Une extrémité de la tige 13, en saillie par rapport au carter 11, coopère avec une gorge 14 annulaire de l'organe de nettoyage 5.

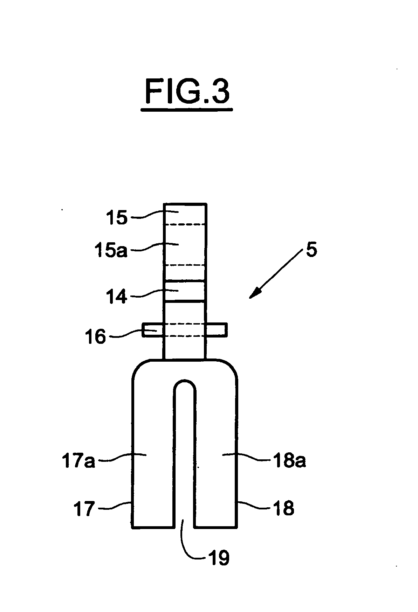

L'organe de nettoyage 5 comprend un porte-couteau 15 articulé autour d'un axe de liaison 16 de la portion d'extrémité 8a de la pièce de support 8 et comprenant des couteaux latéraux 17 et 18 (figure 3). Les couteaux latéraux 17,18 s'étendent de façon inclinée par rapport au premier et au second éléments de guidage 6 et 7, et sont séparés par un passage 19, formé entre les couteaux 17 et 18 (figure 3). Le porte-couteau 15 comprend une portion droite, en partie en regard du carter 11, s'étendant sensiblement du côté opposé du corps 4. La portion droite comprend dans sa partie supérieure la gorge 14 et dans sa partie inférieure une encoche 15a.

Chaque couteau latéral 17, 18 (figure 3) comprend respectivement dans sa partie supérieure et venant en contact sur chacune des faces de la barre 2 une surface de travail 17a, 18a. Les dites surfaces de travail 17a et 18a peuvent être constituées par exemple par un acier trempé.

L'excentrique 12 est agencé de façon qu'une portion des surfaces de travail 17a et 18a de l'organe de nettoyage 5 (figure 3) soient situées sensiblement au-dessus de la surface de contact du patin 7 avec le dépôt 3 de matière dans une position rapprochée par rapport à l'élément de guidage 7. De préférence, dans la position rapprochée les surfaces de travail 17a et 18a de l'organe de nettoyage 5 sont situées entièrement au-dessus de la surface de contact du patin 7 avec le dépôt 3.

Un organe élastique 21, tel qu'un ressort hélicoïdal, disposé autour de la saillie 6d du patin 6, prend appui à une de ses extrémités sur la face supérieure du patin 6 et vient en contact à l'autre extrémité au fond de l'évidemment 15a de la portion rectangulaire 15. L'organe élastique 21 est apte à exercer une force de rappel sur l'organe de nettoyage 5 lorsque ledit organe se trouve dans une position rapprochée par rapport à l'élément de guidage 7.

Des moyens de préhension 22, fixés sur la pièce de support 8 du côté opposé à l'organe de nettoyage 5, s'étendent de façon sensiblement horizontale du côté opposé au corps 4, par exemple une poignée.

Le fonctionnement du dispositif 1 de nettoyage est le suivant : le moteur entraîne en rotation l'arbre de sortie 10 et l'excentrique 12, transmettant ainsi un mouvement de translation radial à la tige 13. Le déplacement de la tige 13 vers les éléments de guidage 6 et 7 provoque le pivotement de l'organe de nettoyage 5 autour de l'axe de liaison 16. Les couteaux 17 et 18 se rapprochent du corps 4, frottant les parois latérales de la barre 2 et arrachant le dépôt 3 de matière, jusqu'à une position extrême rapprochée par rapport à l'élément de guidage 7 dans laquelle une portion des surfaces de travail 17a et 18a soient situés sensiblement au-dessus de la surface de contact du patin 7 avec le dépôt 3 (figure 2). Le dépôt de matière situé sur l'extrémité supérieure des saillies 2a est entraîné par le dépôt de matière latéral arraché par les couteaux 17 et 18. Lors du déplacement radial de la tige 13 dans le sens opposé, les couteaux 16 et 17 reviennent dans une position extrême éloignée par rapport à l'élément de guidage 7, sous l'action de rappel de l'organe élastique 21 (figure 1).

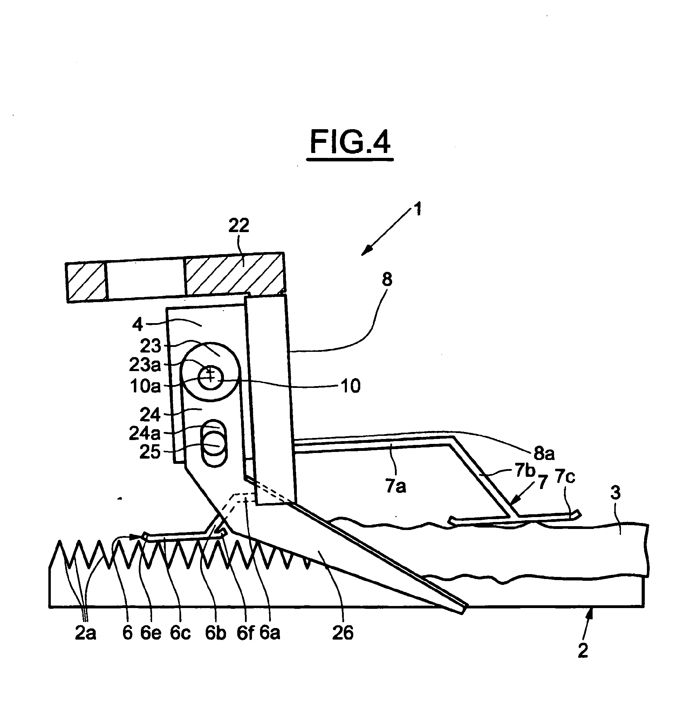

Dans la variante de réalisation illustrée sur la figure 4, sur laquelle les éléments identiques portent les mêmes références, le corps 4 comprenant le moteur (non représenté) est disposé perpendiculairement aux éléments de guidage 6 et 7, la pièce de support 8 étant situé sur une face du corps 4. L'organe de nettoyage 5 comprend une portion cylindrique 23, d'axe 23a, liée en rotation avec l'arbre de sortie 10. L'axe 23a est décalé vers le haut par rapport à l'axe 10a de l'arbre de sortie 10. La portion cylindrique 23 est prolongée en direction de la barre 2 par une portion intermédiaire 24 comprenant un trou oblong 24a s'étendant sensiblement radialement, à l'intérieur duquel est disposé un arbre d'articulation 25. L'arbre d'articulation 25 est fixé rigidement à une extrémité inférieure du corps 4.

La portion intermédiaire 24 est prolongée par deux bras 26 s'étendant de façon inclinée par rapport au premier et au second éléments de guidage 6 et 7, et comprenant des couteaux du même type que ceux précédemment décrits.

D'une manière analogue au mode de réalisation précédent, la rotation de l'arbre de sortie 10 entraîne les couteaux dans un mouvement alternatif entre une position extrême rapprochée et une position extrême éloignée par rapport au second élément de guidage 7 afin de venir arracher le dépôt de matières se trouvant sur les faces latérales et sur l'extrémité supérieure des dents 2a de la barre 2.

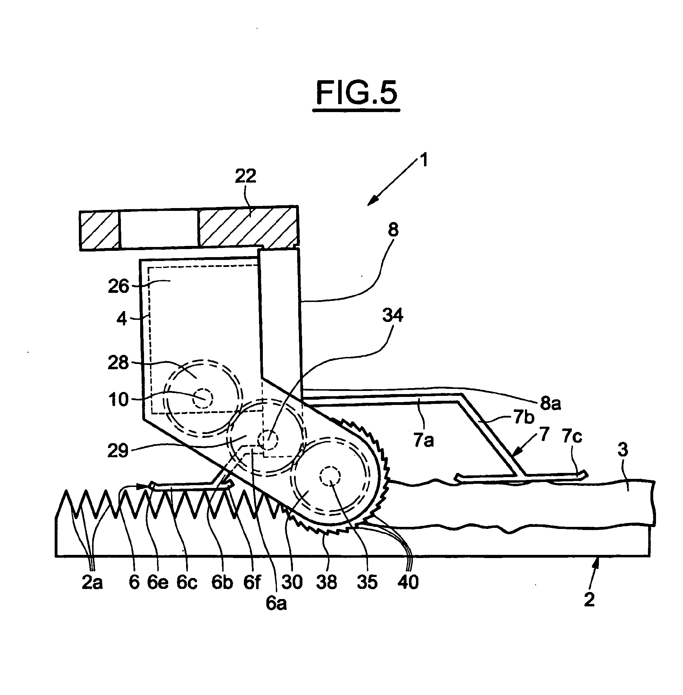

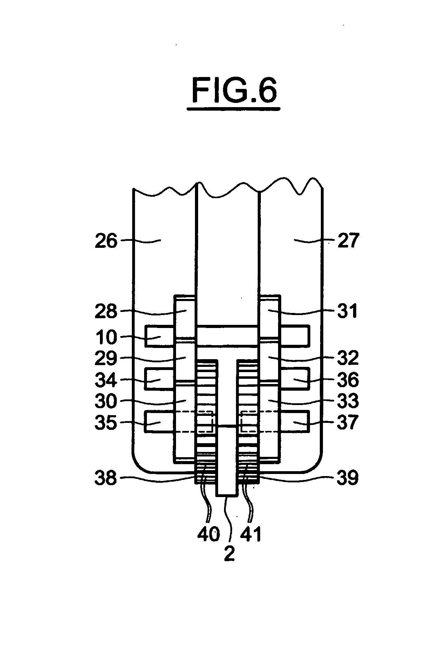

Dans la variante de réalisation illustrée sur la figure 5, sur laquelle les éléments identiques portent les mêmes références, l'organe de nettoyage 5 comprend deux bras 26 et 27 (figure 6) parallèles, fixés au niveau du corps 4 et s'étendant sensiblement de façon inclinée par rapport au second élément de guidage 7. Les bras 26 et 27 (figure 6) sont espacés entre eux et disposés de part et d'autre de la barre 2.

Le bras 26, 27, comprend différentes roues dentées, ici au nombre de trois, référencés 28 à 30, 31 à 33 (figure 6). Les première et quatrième roues 28 et 31 (figure 6) sont liées en rotation avec l'arbre de sortie 10 du moteur (non représenté). La première roue 28 engrène avec la seconde roue 29 supportée par un premier axe 34, lié rigidement sur le bras 26. La seconde roue 29 engrène avec la troisième roue dentée 30, supportée par un second axe 35, monté à rotation sur le bras 26.

D'une manière analogue, la quatrième roue 31 engrène avec la cinquième roue 32 supportée par un troisième axe 36, lié rigidement sur le bras 27. La cinquième roue 32 engrène avec la sixième roue dentée 33 supportée par un quatrième axe 36, monté à rotation sur le bras 27 (figure 6). Les premier et troisième axes 34 et 36 ainsi que les second et quatrième axes 35 et 37 sont coaxiaux entre eux (figure 6).

L'axe 35, 37 est situé sensiblement au niveau de l'extrémité supérieure des dents 2a de la barre 2 et lié en rotation avec un disque 38, 39 (figure 6) muni d'une pluralité de dents métalliques 40, 41 disposé contre une face de la barre 2.

Les dents métalliques 40, 41, forment des couteaux, et sont aptes à arracher le dépôt 3 se trouvant sur les faces latérales et sur l'extrémité supérieure des dents 2a de la barre 2.

Ce mode de réalisation présente l'avantage de diminuer sensiblement les secousses pouvant être ressenties au niveau des moyens de préhension 22 par l'opérateur pendant la phase d'arrachement de la matière grâce au mouvement rotatif des disques 38 et 39. En outre, grâce aux dents 40 et 41 des disques 38 et 39, il peut être également envisageable de prévoir un avancement automatique du dispositif de nettoyage 1 le long de la barre.

Dans une variante de réalisation, les disques 38 et 39 peuvent également être animés d'un mouvement de rotation combiné avec un mouvement d'oscillation afin de réaliser un arrachement de la matière encore plus efficace.

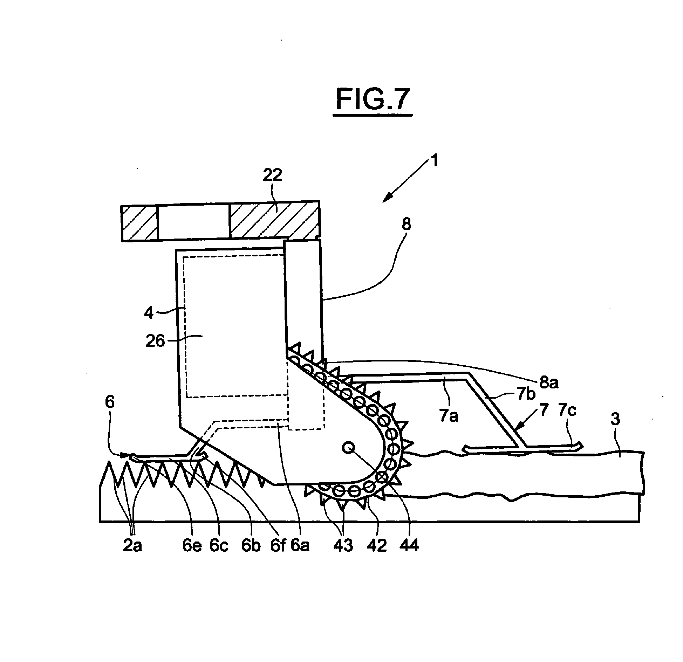

Dans la variante de réalisation illustrée sur la figure 7, sur laquelle les éléments identiques portent les mêmes références, le bras 26 comprend une chaîne 42, représentée schématiquement, munie d'une pluralité de dents 43, entraînée en rotation, de façon connue, par l'intermédiaire d'un pignon (non représenté) fixé sur l'arbre de sortie du moteur et d'une roue d'axe 44 située à l'extrémité du bras 26. L'axe 44 de la roue est situé sensiblement au niveau de l'extrémité supérieure des dents 2a de la barre 2.

La chaîne 42 est en contact avec une face de la barre 2. D'une manière analogue aux modes de réalisations précédents, une seconde chaîne (non représentée) vient en contact avec l'autre face de la barre 2.

Bien entendu, les modes de réalisations précédemment décrits ne sont nullement limitatifs, il est par exemple envisageable de prévoir un dispositif de nettoyage comprenant des disques dentés animés d'un mouvement de rotation et d'un mouvement oscillant afin d'obtenir un arrachement du dépôt de matière sur la barre d'une manière encore plus efficace.

Il est envisageable, de prévoir un ensemble de nettoyage comprenant un socle, un robot manipulateur articulé au niveau du socle apte à manipuler un dispositif de nettoyage le long des barres de support montées sur le banc.

Il est également envisageable de munir un tel robot d'une pluralité de moyens de manipulation permettant d'actionner autant de dispositifs de nettoyage que nécessaire pour nettoyer la totalité des barres de support de tôle simultanément.

Dans le cas où les barres de support sont démontées du banc pour être nettoyées, il est également possible de prévoir un convoyeur permettant d'amener de façon automatique lesdites barres vers un ou plusieurs dispositifs de nettoyage montés fixement sur un socle.

Quel que soit le mode de réalisation de l'invention, le dispositif de nettoyage obtenu est particulièrement simple, économique, et permet de réduire de façon importante le temps de nettoyage des barres de support de tôle.

## Revendications

1. Dispositif de nettoyage d'un dépôt de matière sur une barre (2), qui comprend un corps (4), au moins un élément de guidage (7) fixé sur le corps et pourvu d'une surface de contact avec la barre, un moteur d'entraînement, un organe de nettoyage (5) entraîné par le moteur dans un mouvement entre une position extrême éloignée et une position extrême rapprochée par rapport à l'élément de guidage (7), l'organe de nettoyage (5) comprenant au moins deux couteaux (17, 18), chaque couteau comprenant une surface de travail (17a, 18a), **caractérisé par le fait qu'**un passage (19) est formé entre les couteaux et que l'organe de nettoyage (5) est articulé autour d'un axe de liaison (16) du corps et est entraîné par le moteur, de telle sorte que dans la position extrême rapprochée au moins une portion de ladite surface de travail est sensiblement au niveau de la surface de contact de l'élément de guidage (7).

2. Dispositif selon la revendication 1, **caractérisé par le fait que** chaque couteau (17,18) comprend une surface de contact avec la barre.

3. Dispositif selon les revendications 1 ou 2, **caractérisé par le fait qu'**il comprend un premier élément de guidage (6) et un second élément de guidage (7) disposés de part et d'autre de l'organe de nettoyage (5).

4. Dispositif selon l'une quelconque des revendications précédentes, **caractérisé par le fait que** les couteaux (17,18) sont inclinés par rapport à l'élément de guidage (7).

5. Dispositif selon l'une quelconque des revendications précédentes, **caractérisé par le fait que** l'organe de nettoyage (5) est réalisé de façon monobloc.

6. Dispositif selon l'une quelconque des revendications précédentes, **caractérisé par le fait que** l'organe de nettoyage comprend deux roues dentées (38,39).

7. Dispositif selon l'une des revendications 1 à 5, **caractérisé par le fait que** l'organe de nettoyage comprend deux chaînes dentées (42).

8. Dispositif selon l'une quelconque des revendications précédentes, **caractérisé par le fait qu'**il comprend des moyens de préhension (22) fixés au niveau du corps (4).

9. Ensemble de nettoyage d'un dépôt de matière sur une barre, **caractérisé par le fait qu'**il comprend un dispositif de nettoyage selon l'une quelconque des revendications précédentes, un socle, un robot articulé au niveau du socle et comprenant au moins un moyen de manipulation apte à coopérer avec des moyens de préhension du dispositif de nettoyage, de telle sorte que le dispositif de nettoyage peut manipulé par le robot le long la barre.

10. Ensemble de nettoyage selon la revendication 9, **caractérisé par le fait que** le robot est mobile par rapport au socle.

11. Ensemble de nettoyage selon la revendication 9, **caractérisé par le fait qu'**il comprend un convoyeur de barres, le robot étant fixe par rapport au socle.

12. Procédé de nettoyage d'un dépôt de matière sur une barre (2), dans lequel:
- on guide un dispositif de nettoyage selon la revendication 1 en guidant l'organe de nettoyage (5) sur une portion de la barre (2) par l'intermédiaire de la surface de contact d'au moins un élément de guidage (7), et
- on entraîne l'organe de nettoyage (5) d'une position extrême éloignée jusqu'à une position extrême rapprochée par rapport à l'élément de guidage (7) dans laquelle la surface de travail (17a, 18a) des couteaux (17, 18) est sensiblement au niveau de la surface de contact de l'élément de guidage (7).

## Patentansprüche

1. Vorrichtung zum reinigenden Entfernen einer Materialablagerung auf einem Stab (2), mit einem Körper (4), mit wenigstens einem Führungselement (7), das an dem Körper angebracht und mit einer Kontaktfläche für einen Kontakt mit dem Stab versehen ist, mit einem Antriebsmotor und mit einem Reinigungsorgan (5), das durch den Motor mit einer Bewegung zwischen einer von dem Führungselement (7) entfernten und einer an das Führungselement (7) angenäherten Endlage angetrieben wird, wobei das Reinigungsorgan (5) wenigstens zwei Schneiden (17, 18) und jede Schneide wenigstens eine Arbeitsfläche (17a, 18a) umfasst, **dadurch gekennzeichnet, dass** zwischen den Schneiden ein Durchgang (19) ausgebildet ist und dass das Reinigungsorgan (5) um eine Verbindungsachse (16) des Körpers schwenkbeweglich ist und durch den Motor derart angetrieben wird, dass in der angenäherten Endlage wenigstens ein Teil der Arbeitsfläche im Wesentlichen auf Höhe der Kontaktfläche des Führungselementes (7) angeordnet ist.

2. Vorrichtung nach Anspruch 1, **dadurch gekennzeichnet, dass** jede Schneide (17, 18) eine Kontaktfläche für einen Kontakt mit dem Stab umfasst.

3. Vorrichtung nach Anspruch 1 oder Anspruch 2, **dadurch gekennzeichnet, dass** die Vorrichtung ein erstes Führungselement (6) und ein zweites Führungselement (7) umfasst, die auf beiden Seiten des Reinigungsorgans (5) angeordnet sind.

4. Vorrichtung nach einem der vorhergehenden Ansprüche, **dadurch gekennzeichnet, dass** die Schneiden (17, 18) gegenüber dem Führungselement (7) geneigt sind.

5. Vorrichtung nach einem der vorhergehenden Ansprüche, **dadurch gekennzeichnet, dass** das Reinigungsorgan (5) einstückig ausgebildet ist.

6. Vorrichtung nach einem der vorhergehenden Ansprüche, **dadurch gekennzeichnet, dass** das Reinigungsorgan zwei verzahnte Räder (38, 39) umfasst.

7. Vorrichtung nach einem der Ansprüche 1 bis 5, **dadurch gekennzeichnet, dass** das Reinigungsorgan zwei verzahnte Ketten (42) umfasst.

8. Vorrichtung nach einem der vorhergehenden Ansprüche, **dadurch gekennzeichnet, dass** die Vorrichtung Haltemittel (22) umfasst, die auf Höhe des Körpers (4) angebracht sind.

9. Anordnung zum reinigenden Entfernen einer Materialablagerung auf einem Stab, **dadurch gekennzeichnet, dass** die Anordnung eine Reinigungsvorrichtung nach einem der vorhergehenden Ansprüche, einen Sockel sowie einen Roboter umfasst, wobei der Roboter auf Höhe des Sockels angelenkt ist und wenigstens ein Handhabungsmittel umfasst, welches geeignet ist, mit Haltemitteln der Reinigungsvorrichtung derart zusammenzuwirken, dass die Reinigungsvorrichtung mittels des Roboters entlang des Stabes geführt werden kann.

10. Reinigungsanordnung nach Anspruch 9, **dadurch gekennzeichnet, dass** der Roboter relativ zu dem Sockel beweglich ist.

11. Reinigungsanordnung nach Anspruch 9, **dadurch gekennzeichnet, dass** die Reinigungsanordnung einen Stabförderer umfasst, wobei der Roboter relativ zu dem Sockel ortsfest ist.

12. Verfahren zum reinigenden Entfernen einer Materialablagerung auf einem Stab, im Rahmen dessen:
- eine Reinigungsvorrichtung nach Anspruch 1 geführt wird, indem das Reinigungsorgan (5) mittels der Kontaktfläche wenigstens eines Führungselementes (7) auf einem Teil des Stabes (2) geführt wird und
- das Reinigungsorgan (5) aus einer von dem Führungselement (7) entfernten in eine dem Führungselement (7) angenäherte Endlage angetrieben wird, in welcher die Arbeitsfläche (17a, 18a) der Schneiden (17, 18) im Wesentlichen auf Höhe der Kontaktfläche des Führungselementes (7) angeordnet ist.

## Claims

1. Device for cleaning a deposit of material on a bar (2), which comprises a body (4), at least one guiding element (7) which is fixed to the body and which is provided with a surface for contact with the bar, a drive motor, a cleaning member (5) which is driven by the motor in a movement between an extreme remote position and an extreme close position relative to the guiding element (7), the cleaning member (5) comprising at least two blades (17, 18), each blade comprising a work surface (17a, 18a), **characterised in that** a passage (19) is formed between the blades and **in that** the cleaning member (5) is articulated about a connection axis (16) of the body and is driven by the motor so that in the extreme close position at least a portion of the work surface is substantially in the region of the contact surface of the guiding element (7).

2. Device according to claim 1, **characterised in that** each blade (17, 18) comprises a surface for contact with the bar.

3. Device according to claim 1 or claim 2, **characterised in that** it comprises a first guiding element (6) and a second guiding element (7) which are arranged at one side and the other of the cleaning member (5).

4. Device according to any one of the preceding claims, **characterised in that** the blades (17, 18) are inclined relative to the guiding element (7).

5. Device according to any one of the preceding claims, **characterised in that** the cleaning member (5) is made in an integral manner.

6. Device according to any one of the preceding claims, **characterised in that** the cleaning member comprises two toothed wheels (38, 39).

7. Device according to any one of claims 1 to 5, **characterised in that** the cleaning member comprises two toothed chains (42).

8. Device according to any one of the preceding claims, **characterised in that** it comprises gripping means (22) which are fixed in the region of the body (4).

9. Assembly for cleaning a deposit of material on a bar, **characterised in that** it comprises a cleaning device according to any one of the preceding claims, a base, a robot which is articulated in the region of the base and which comprises at least one handling means which is capable of cooperating with gripping means of the cleaning device in such a manner that the cleaning device can be handled by the robot along the bar.

10. Cleaning assembly according to claim 9, **characterised in that** the robot can be moved relative to the base.

11. Cleaning assembly according to claim 9, **characterised in that** it comprises a bar conveyor, the robot being fixed relative to the base.

12. Method for cleaning a deposit of material on a bar (2), wherein:
- a cleaning device according to claim 1 is guided by the cleaning member (5) being guided on a portion of the bar (2) by means of the contact surface of at least one guiding element (7), and
- the cleaning member (5) is driven from an extreme remote position to an extreme close position relative to the guiding element (7) in which the work surface (17a, 18a) of the blades (17, 18) is substantially in the region of the contact surface of the guiding element (7).
